# EUROPÄISCHE PATENTANMELDUNG

(11) **EP 1 850 449 A2**
(43) Veröffentlichungstag der Anmeldung: **31.10.2007**
(21) Anmeldenummer: 07008054.4
(22) Anmeldetag: 20.04.2007
(51) Int. Cl.: H02K 1/14, H02K 21/14

(54) **Elektromotor**

(30) Priorität: 28.04.2006 DE 102006021246
(71) Anmelder: Bühler Motor GmbH, 90459 Nürnberg (DE)
(72) Erfinder: Ihle, Olai, 90542 Eckental (DE); Peterreins, Thomas, 90475 Nürnberg (DE)

(57) **Zusammenfassung**

Die Erfindung betrifft einen Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem zylindermantelförmigen Rückschlussring (43), wobei die Länge der Klauenpole in achsparalleler Richtung deutlich größer ist als der halbe Innendurchmesser des Stators (40). Aufgabe der Erfindung ist es einen Elektromotor darzustellen, bei dem der Stator aus möglichst wenigen Bauteilen zusammengesetzt ist, dessen Montage einfach ist, dessen Aufbau robust ist und der einen optimaler Wirkungsgrad aufweist, wobei eine große Formgebungsfreiheit und Bauraumnutzbarkeit und damit ein wirtschaftlicher Aufbau möglich ist. Diese Aufgabe wird erfindungsgemäß dadurch gelöst, dass weder die scheibenförmigen Statorbleche (420) noch die Klauenpole (42) in Umfangsrichtung eine Naht- oder Verbindungsstelle aufweist.

## Beschreibung

Die Erfindung betrifft einen Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem zylindermantelförmigen Rückschlussring (43), wobei die Länge der Klauenpole in achsparalleler Richtung deutlich größer ist als der halbe Innendurchmesser des Stators (40).

Die gebräuchlichste Art Klauenpolstatoren herzustellen besteht darin, aus einer Scheibe die vorgestanzten Klauen im Zentrum der Scheibe rechtwinklig abzubiegen. Auf diese Weise ist die maximale Länge der Klauen in Achsrichtung begrenzt auf ca. dem halben Innendurchmesser des Stators. Dadurch sind die erzielbaren Leistungen derartiger Motoren begrenzt und es müssen gegebenenfalls mehrere Statoren hintereinander angeordnet werden.

Aus der EP 1 263 115 A2 ist ein gattungsgemäßer Elektromotor bekannt. Bei dem bekannten Elektromotor ist der Stator aus vier Bauteilen zusammengesetzt. Dabei sind die Klauenpole aus streifenförmigen Blechen ausgestanzt und anschließend zu einem Ring gebogen und die Enden miteinander verbunden. Zwei dieser gebogenen Klauenpolbleche werden anschließend zusammen mit zwei weiteren Statorblechteilen montiert. Dieses Verfahren ist relativ aufwändig und unzuverlässig. Die vielen Nahtstellen erhöhen zudem den magnetischen Widerstand und verringern dadurch den Wirkungsgrad des Motors.

Aufgabe der Erfindung ist es daher einen Elektromotor darzustellen, bei dem der Stator aus möglichst wenigen Bauteilen zusammengesetzt ist, dessen Montage einfach ist, dessen Aufbau robust ist und der einen optimaler Wirkungsgrad aufweist, wobei eine große Formgebungsfreiheit und Bauraumnutzbarkeit und damit ein wirtschaftlicher Aufbau möglich ist.

Diese Aufgabe wird erfindungsgemäß dadurch gelöst, dass weder die scheibenförmigen Statorbleche (420) noch die Klauenpole (42) in Umfangsrichtung eine Naht- oder Verbindungsstelle aufweist. Hierdurch ist der magnetische Widerstand gering und entsprechend der Wirkungsgrad hoch und die Montage ist vereinfacht, weil weniger Teile miteinander zu verbinden sind.

Weiterbildungen der Erfindung werden in den Unteransprüchen dargestellt. Der magnetisch leitfähige Teil des Stators (40) besteht vorzugsweise nur aus drei Einzelteilen. Dies ist nur möglich, wenn der magnetisch leitfähige Teil des Stators (40) aus zwei scheibenförmigen Statorblechen (420), die jeweils mit mehreren Klauenpolen (42) einstückig sind und einem zylindermantelförmigen Rückschlussring (43) bestehen.

In den scheibenförmigen Statorbleche (420) sind Aussparungen (422) vorgesehen, die am radial äußerem Rand der Statorbleche (420) angeordnet und dort gleichmäßig verteilt sind. Die Aussparungen (422) sind vorzugsweise V-förmig ausgebildet und dienen als Aussparung zur Drahtdurchführung für einen Spulenanfang und ein Spulenende. Die Aussparungen dienen auch zum orientierten Einlegen in eine Spritzgussform. Zur Erleichterung dieses Einlegens sind vier gleichmäßig über den Umfang verteilte Aussparungen vorgesehen, so dass vier unterschiedliche Einlegemöglichkeiten vorhanden sind.

Der Rückschlussring (43) sollte möglichst spielfrei mit den Statorblechen (420) verbunden sein, um einen geringen magnetischen Widerstand und damit einen hohen Wirkungsgrad zu erreichen. Vorzugsweise ist der Rückschlussring (43) mit den Statorblechen (420) verstemmt. Diese Verbindung lässt sich einfach herstellen, indem der Rückschlussring (43) an mehreren Stellen in seinem axialen Randbereich geschlitzt ist und an die Schlitze (431) angrenzende Blechbrücken (430) radial nach innen verformt sind. Durch die Verformung ist der Rückschlussring nach innen auf die scheibenförmigen Statorbleche (420) gezogen, wodurch der magnetische Widerstand in diesem Bereich verringert ist. Weiter bilden die Blechbrücken (430) eine formschlüssige Verbindung zwischen dem Rückschlussring (43) und den scheibenförmigen Statorblechen (420), also auch den Klauenpolen (42) in axialer Richtung.

Um den Abstand der beiden scheibenförmigen Statorbleche (420) mit den Klauenpolen zu fixieren sollen diese über ein elektrisch isolierendes Kunststoffmaterial miteinander verbunden sein. Vorzugsweise wird dies so gestaltet, dass die Klauenpole mit plastisch verarbeitbarem Kunststoffmaterial in Form eines Isolierstoffkörpers (46) für die Statorwicklung umspritzt sind.

In Weiterbildung dieses Erfindungsgedankens wird vorgeschlagen den Isolierstoffkörper (46) mit Klemmschneidkontakten (63) auszubilden, wobei je anzuschließendem Wickeldraht ein Vorsprung (466) am Isolierstoffkörper in Axialrichtung vorgesehen ist, der einen Aufnahmeschlitz (461) für einen Anschlussdraht und eine Montageausnehmung (462) für einen Kontaktpin (62) aufweist.

Zweckmäßigerweise ist der Isolierstoffkörper (46) mit Befestigungsmitteln (463) für eine Leiterplatte (61) einstückig. Die Befestigungsmittel (463) sind dabei aus einem Anschlag (464) und einem Schnappmittel (465) zusammengesetzt. Der Anschlag bestimmt die axiale Lage der Leiterplatte in Bezug auf den Isolierstoffkörper und die Schnappmittel sorgen für einen sicheren Halt der Leiterplatte in dieser Lage wobei sie in radialer Richtung eine Formschlüssige Verbindung darstellen und nur axial unter Krafteinwirkung überwindbar sind. Die Leiterplatte weist an die Schnappmittel im Durchmesser angepasste Ausnehmungen aus. So lässt sich die Leiterplatte schnell und einfach an den Isolierstoffkörper befestigen, wobei weiter vorgesehen ist, dass der Kontaktpin (62) einerseits eine Klemmschneidgeometrie aufweist und andererseits als lotfreier Einpresskontakt ausgebildet ist, der mit der Leiterplatte (61) elektrisch verbunden ist. Durch diese Ausbildung des Kontaktpins lässt sich bei der Montage der Leiterplatte gleichzeitig eine elektrische Verbindung zwischen der Statorwicklung und der Leiterplatte herstellen. Die Kontaktpins werden vorzugsweise vor der Montage der Leiterplatte in diese eingepresst.

Die Erfindung umfasst auch eine Kreiselpumpe die von einem Elektromotor der oben beschriebenen Art angetrieben wird.

Bei Verwendung in einer Kreiselpumpe wird vorgeschlagen, dass der Isolierstoffkörper mit einem Spalttopf (116) einstückig ist, der einen Nassraum (101) von einem Trockenraum (99) der Kreiselpumpe abgrenzt. Hierdurch lässt sich der Isolierstoffkörper als zusätzliches Bauteil einsparen.

Bei einer besonders bevorzugten Weiterbildung der Erfindung besteht der Spalttopf (116) aus einem Kunststoffmaterial, das für Laserlicht einer Wellenlänge oder eines Wellenlängenbereichs transparent ist, der Spalttopf (116) als Bestandteil eines zweiten Gehäuseteils (104) mit einem ersten Gehäuseteil (103) verschweißt ist und der Spalttopf (116) als Bestandteil eines zweiten Gehäuseteils (104) mit einem Motorgehäuseteil (44) verschweißt ist. Das erste Gehäuseteil (103) oder das Motorgehäuseteil (44) bestehen aus einem dasselbe Laserlicht absorbierendem Material. Durch diese Anordnung ist es möglich die das erste Gehäuseteil (103) mit dem zweiten Gehäuseteil (104) und das zweite Gehäuseteil (104) mit dem Motorgehäuseteil (44) mit Hilfe des Laserdurchstrahlschweißverfahren fest und dicht miteinander zu verschweißen.

Das bevorzugte Verfahren zur Herstellung von Klauenpolen weist folgende Schritte auf: - Tiefziehen eines Topfs aus magnetisch leitfähigem Blechmaterial, - axiales Ausstanzen von Klauenpolen aus dem Topf, Umformen der Klauenpole in eine exakte Form. Vorteilig ist hier, dass eine ausreichende Rundheit der scheibenförmigen Statorbleche erzielt werden kann, so dass ein niedriger magnetischer Widerstand zu dem Rückschlussring herstellbar ist.

Ein Ausführungsbeispiel wird nachfolgend anhand der Zeichnung näher erläutert. Es zeigt:
- Fig. 1: zeigt ein Statorblech,
- Fig. 2: zeigt zwei Statorbleche in Gegenüberstellung,
- Fig. 3: eine Schnittansicht durch eine erfindungsgemäße Kreiselpumpe,
- Fig. 4: eine Seitenansicht (von rechts) eines rohrförmigen Rückschlussrings,
- Fig. 5: Vorderansicht des Rückschlussrings,
- Fig. 6: eine räumliche Darstellung des Rückschlussrings und
- Fig. 7: eine Seitenansicht (von links) des Rückschlussrings.

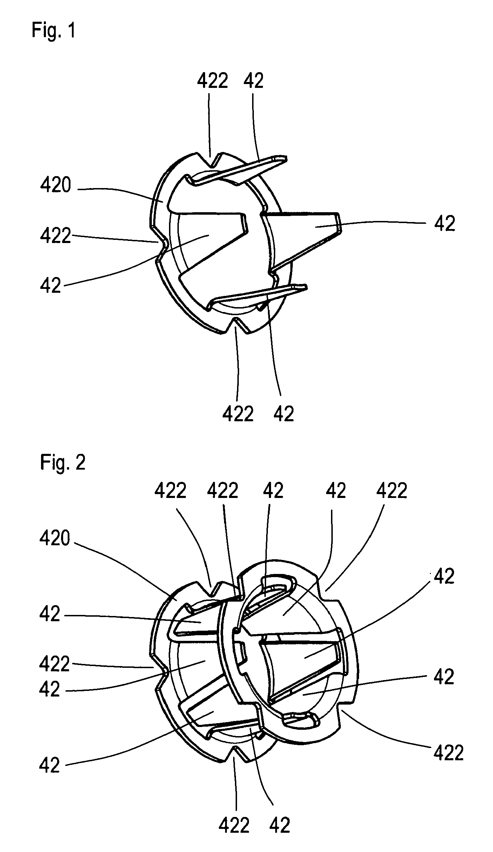

Fig. 1 zeigt ein scheibenförmiges Statorblech 420 mit daran anschließenden Klauenpolen 42. Die Klauenpole sind trapezförmig ausgebildet, um das magnetische Rastmoment zu reduzieren. Das scheibenförmige Statorblech 420 zeigt im Bereich der Klauenpole V-förmige Ausnehmungen

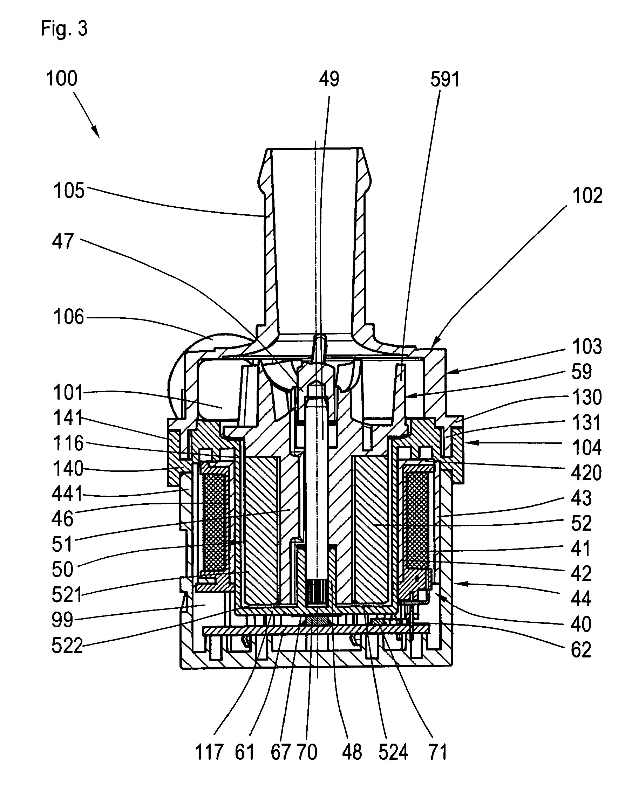

Fig. 3 zeigt eine Schnittansicht durch eine erfindungsgemäße Kreiselpumpe 100, mit einem Pumpengehäuse 102, bestehend aus einem ersten Gehäuseteil 103 und einem daran anschließenden zweiten Gehäuseteil 104. Ein Motorgehäuseteil 44 begrenzt einen Trockenraum, der von einem Stator (40) eines elektronisch kommutierten Gleichstrommotors und seiner Ansteuerelektronik ausgefüllt wird. Das Motorgehäuseteil 44 schließt an das zweite Gehäuseteil 102 and. Das erste und das zweite Gehäuseteil 103, 104 begrenzen einen Nassraum 101 der Kreiselpumpe. Das zweite Gehäuseteil 104 ist einstückig mit einem Spalttopf 116 geformt, welcher den Nassraum 101 von einem Trockenraum 99.

Der Nassraum 101 enthält eine Achse 49, die zwischen einer spalttopfseitigen Achsaufnahme 48 und einer saugstutzenseitigen Achsaufnahme 47 fest eingebaut ist. Eine Rändelung am Achsenende verhindert eine Verdrehung der Achse 49 während des Pumpenbetriebs. Auf der Achse 49 ist ein Festlager 54 drehbar gelagert, welches in einer hohlen Welle 51 des Rotors 50 eingepresst ist. Die Welle 51 ist einstückig mit einem Pumpenlaufrad 59, das mehrere etwa spiralförmig geformte Flügel 591 für die Flüssigkeitsförderung enthält. Die Stirnflächen des Festlagers 54 können sich axial unter Zwischenlage von Anlaufscheiben gegen die spalttopfseitige Achsaufnahme 48 und gegen die saugstutzenseitige Achsaufnahme 47 abstützen. Ein hohlzylindrischer Ferritmagnet 52 ist auf die hohle Welle 51 aufgeklebt, wobei ein elastischer Kleber verwendet wird, der in vier oder fünf in die Hohlwelle geformte achsparallele Nuten 511 eingebracht ist.

Der Trockenraum 99 enthält den Stator 40 des elektronisch kommutierten Gleichstrommotors 10, der in Form einer hohlzylindrischen Statorwicklung 41 ausgebildet ist, wobei deren Magnetfeld im Betrieb über Klauenpole in alternierende Weise an den Umfang des Spalttopfs 116 geführt wird und mit dem hohlzylindrsichen Permanentmagneten 52 im Nassraum 101 wechselwirkt. Der magnetische Kreis wird durch einen Rückschlussring 43, der mit scheibenförmigen Statorblechen 420 mit den Klauenpolen 42 verbunden ist, geschlossen. Die Klauenpole 42 sind durch Umspritzen mit einem Isolierstoffkörper 46 versehen, der die Klauenpole 42 mechanisch aber nicht magnetisch miteinander verbindet. Der Stator 40 weist im vorliegenden Beispiel vier Polpaare auf. Der Isolierstoffkörper 46 ist geometrisch so geformt, dass die Wicklungsdrähte der Statorwicklung 41 mit Klemmschneidkontakte aufweisenden Kontaktpins 62 verbindbar sind, wobei diese Klemmschneidkontakte im Isolierstoffkörper 46 mechanisch befestigbar sind. Die Kontaktpins 62 sind als Kombi-Kontakte geformt und an ihrem dem Klemmschneidkontakt 63 gegenüberliegenden Ende in eine Leiterplatte 61 eingepresst und dadurch mit dieser kontaktiert. Die Kontaktpins 62 enthalten hierfür ein oder zwei verformbare Einpresszonen. Die Leiterplatte 61 enthält einen Hall-Sensor 71, einen integrierten Schaltkreis 70 (IC) für die Beschaltung der Statorwicklung, einen PTC für den Wicklungsschutz und Steckerpins 64 für die Spannungsversorgung. Das Motorgehäuseteil 44 beinhaltet ein Steckergehäuse 65 in welchem die Steckerpins 64 angeordnet sind. Elektronische Bauteile mit großer Verlustwärme werden über Wärmeleitfolien 67 zum Nassraum 101 hin entwärmt. Leiterbahnen, die zur Kontaktierung von zu kühlenden Bauelementen dienen, sind so dimensioniert, dass zur leichteren Wärmeabfuhr möglichst breite Leiterbahnen 66 auf der Leiterplatte 61 vorgesehen sind. Um eine besonders gute Ausnutzung der Leiterplatte 61 und eine optimale Wärmeabfuhr zu erreichen, sind die unterschiedlichen Leiterbahnen 66 unterschiedlich breit ausgeführt, je nach dem wie viel Wärme in dem zu kontaktierenden Bauteileanschluss entsteht. In der Welle 51 ist eine Längsnut als Kühlkanal zwischen einem Boden 117 des Spalttopfs 116 und dem Pumpenlaufrad 59 eingeformt, der eine kontinuierliche Umwälzung des Fördermediums auch im Innenbereich des Spalttopfs 116 erzwingt. Die Leiterplatte ist zwischen einer Stirnseite 45 des Motorgehäuses 44 und dem Boden 117 des Spalttopfs 116 angeordnet und über die Wärmeleitfolie 67 in wärmeleitendem Kontakt mit dem Boden 117 gehalten.

Das erste Gehäuseteil 103 weist einen ersten Flansch 130 und einen ersten daran anschließenden Ring 131 auf. Das zweite Gehäuseteil 104 weist einen zweiten Flansch 140 und einen zweiten daran anschließenden Ring 141 auf. Das Motorgehäuseteil weist einen dritten Ring 441 auf. Der zweite Flansch 140 und der zweite Ring 141 bilden im Querschnitt zusammen eine T-Form. Es sind vier Dichtungsbereiche 133, 144, 145 und 444 vorgesehen. Der erste Dichtungsbereich befindet sich auf der radial außen liegenden Seite des ersten Rings 131 am ersten Gehäuseteil 103. Gegenüberliegend auf der radial innen liegenden Seite des zweiten Rings 141 und des zweiten Gehäuseteils 104 befindet sich der zweite Dichtungsbereich 144. Ebenfalls auf der radial innen liegenden Seite des zweiten Rings 141 und des zweiten Gehäuseteils 104 befindet sich der dritte Dichtungsbereich 145. Diesem gegenüberliegend auf der radial außen liegenden Seite des dritten Rings 441 und des Motorgehäuseteils 44 befindet sich der vierte Dichtungsbereich 444. Das zweite Gehäuseteil 104 besteht aus einem für Laserlicht einer Wellenlänge oder eines Wellenlängenbereichs durchlässiges Material. Das erste Gehäuseteil 103 und das Motorgehäuseteil 44 bestehen aus einem dasselbe Laserlicht absorbierendem Material. Dadurch lässt sich ein Laserstrahl ohne Erwärmung des transparenten Materials bis zu einer Nahtstelle führen. Dort trifft der Strahl auf Material, das das Licht absorbiert und in Wärme umwandelt, wodurch der Kunststoff aufschmilzt und eine innige Verbindung mit dem benachbarten Material eingeht.

Da die beiden zu verschweißenden Dichtungsbereiche nahe beieinander liegen ist es ohne Schwierigkeiten möglich die beiden Nähte in einer Vorrichtung und in einem Arbeitsgang herzustellen. Die Schweißvorrichtung kann zwei einzelne Laser aufweisen, wobei mit jeweils einem Laserstrahl eine Schweißnaht hergestellt wird oder sie kann einen einzigen Laser aufweisen, dessen Ausgangsstrahl durch einen Strahlteiler in zwei Strahlenbündel geteilt wird, von denen jeder eine der Schweißnähte erzeugt. Im vorliegenden Beispiel werden die Laserstrahlen radial auf das Pumpengehäuse gelenkt.

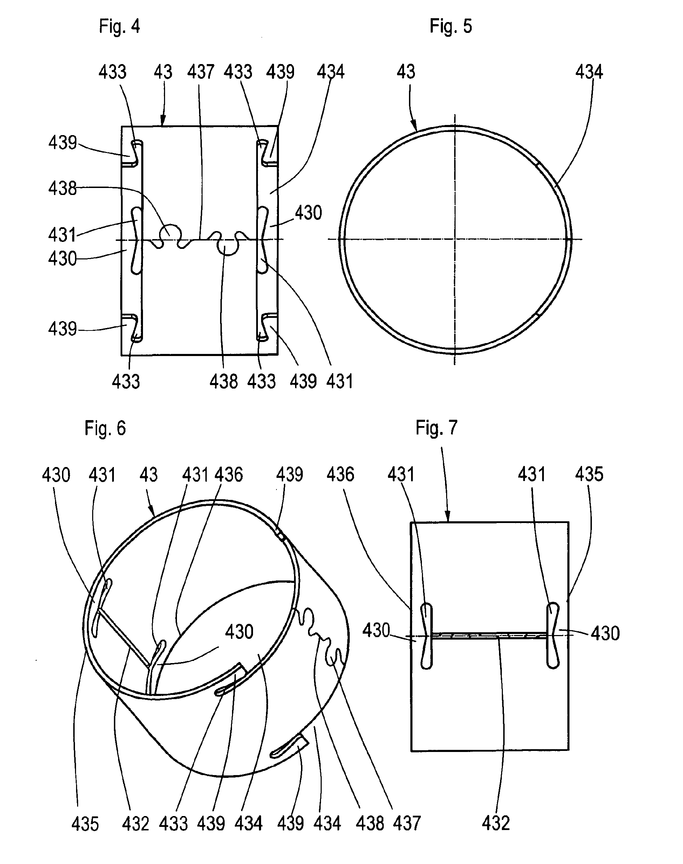

Fig. 4 zeigt eine Seitenansicht (von rechts) eines rohrförmigen Rückschlussrings 43, der aus einem Blechstreifen ausgestanzt und gerollt ist. Die beiden Enden des Blechstreifens sind an einer Nahtstelle 437 miteinander verbunden. Die Nahtstelle wird hier in Form von formschlüssigen und knopfartigen zueinander passenden Verbindungsmitteln 438 gebildet. Der Rückschlussring weist (hier an seiner Rückseite zu sehen) sich am Umfang des Rückschlusses und in seinem Randbereich angeordnete Schlitze 431 auf, die zu ihrer Mitte hin verjüngt sind und die an ihren Enden Radien aufweisen. Wie in Fig. 6 und 7 deutlich erkennbar ist, sind zwei Schlitze 431 vorhanden, die im gleichen Umfangsbereich aber an gegenüberliegenden Rändern 435, 436 angeordnet sind. Die beiden Schlitze 431 sind durch einen Verbindungsschlitz 432, der jeweils von der Mitte der Schlitze 431 ausgeht miteinander verbunden. Die Schlitze 431 und 432 bilden zusammen eine H-Form. Die Schlitze 431 grenzen jeweils einen Steg 430 vom Rückschlusskörper ab. Weiter zeigen die Fig. 4 und 6 offene Schlitze 433, die zu einer Aussparung 434 hin offen sind. Durch die Schlitze 433 bilden sich Blechzungen (439), die durch radiales Umbiegen (nach innen) zur axialen Sicherung der Statorbleche 420 dienen. Die Blechbrücken 430 dienen sowohl zur axialen Sicherung der Statorbleche 420 als auch zur Verringerung des Durchmessers des Rückschlusses. Durch radiales Verformen der Blechbrücken 430 wird der Verbindungsschlitz 432 verengt, gegebenenfalls bis sich die beiden Randbereiche des Verbindungsschlitzes 432 berühren.

In Fig. 5 ist eine Vorderansicht des Rückschlussrings 43 mit der Aussparung 434 dargestellt.

Fig. 6 zeigt eine räumliche Darstellung des Rückschlussrings 43 und Fig. 7 eine Seitenansicht (von links).

### Bezugszeichenliste

- 10: Elektromotor
- 20: Luftspalt
- 40: Stator
- 41: Statorwicklung
- 42: Klauenpol
- 420: ringscheibenförmige Statorbleche
- 421: Ende
- 422: Aussparung
- 423: Steg
- 424: Luftspalt
- 43: Rückschlussring
- 430: Blechbrücke
- 431: Schlitz
- 432: Verbindungsschlitz
- 433: offener Schlitz
- 434: Freisparung
- 435: erster Rand
- 436: zweiter Rand
- 437: Nahtstelle
- 438: Verbindungsmittel
- 439: Blechzunge
- 44: Motorgehäuse
- 45: Stirnseite (des Motorgehäuses)
- 46: Isolierstoffkörper
- 461: Aufnahmeschlitz
- 462: Montageausnehmung
- 463: Befestigungsmittel
- 464: Anschlag
- 465: Schnappmittel
- 466: Vorsprung
- 467: Halterung (für Steckerpin)
- 47: saugstutzenseitige Achsaufnahme
- 48: spalttopfseitige Achsaufnahme
- 49: Achse

- 50: Rotor
- 51: Welle
- 511 1: Nut
- 512: Scheibe
- 52: hohlzylindrischer Permanentmagnet
- 521: Arbeitsmagnetisierung
- 522: Sensorspur-Magnetisierung
- 523: Stirnseite (des Permanentmagneten)
- 524: Sicherheitsspalt
- 53: elastisches Verbindungsmittel
- 531: erster Bereich (breit)
- 532: zweiter Bereich (schmal)
- 54: Festlager
- 58: Längsnut (für sekundären Flüssigkeitskreislauf)
- 59: Pumpenlaufrad
- 591: Flügel
- 60: Elektronik
- 61: Leiterplatte
- 611: Ausnehmungen
- 62: Kontaktpin
- 63: Klemmschneidkontakt
- 64: Steckerpin
- 641: Anformungen
- 65: Steckergehäuse
- 66: Leiterbahn
- 67: Wärmeleitfolie
- 70: Integrierter Schaltkreis (IC)
- 71: Hall-Sensor
- 99: Trockenraum
- 100: Kreiselpumpe
- 101: Nassraum
- 102: Pumpengehäuse
- 103: erstes Gehäuseteil
- 104: zweites Gehäuseteil
- 105: Saugstutzen
- 106: Druckstutzen
- 109: Pumpenraum

- 111 1: runde Kontur
- 112: Sporn
- 113: Übergangsbereich
- 114: Umfangswandung
- 115: scharfe Kante
- 116: Spalttopf
- 117: Boden
- 118: Rotorraum
- 119: Vertiefung
- 120: spiralförmige Innenkontur
- 121: Aufnahme
- 122: Pumpenbefestigungsmittel
- 123: Verrundung
- 130: erster Flansch
- 131: erster Ring
- 133: erster Dichtungsbereich
- 140: zweiter Flansch
- 141: zweiter Ring
- 144: zweiter Dichtungsbereich
- 145: dritter Dichtungsbereich
- 150: Schwalbenschwanzkontur
- 151: komplementäre Kontur
- 152: V-förmige Ausnehmung
- 441: dritter Ring
- 444: vierter Dichtungsbereich

## Patentansprüche

1. Elektromotor (10) mit einem um eine zentrale Achse drehbar gelagerten Permanentmagnetrotor (50), einem bewickelten Stator (40) mit einer zylinderringförmigen Statorwicklung (41), Klauenpolen (42), die rechtwinklig zu scheibenförmigen Statorblechen (420) und um die zentrale Achse herum angeordnet sind und einem zylindermantelförmigen Rückschlussring (43), wobei die Länge der Klauenpole in achsparalleler Richtung deutlich größer ist als der halbe Innendurchmesser des Stators (40) **dadurch gekennzeichnet, dass** weder die scheibenförmigen Statorbleche (420) noch die Klauenpole (42) in Umfangsrichtung eine Naht- oder Verbindungsstelle aufweist.

2. Elektromotor nach Anspruch 1, **dadurch gekennzeichnet, dass** der magnetisch leitfähige Teil des Stators (40) aus maximal drei Einzelteilen besteht.

3. Elektromotor nach Anspruch 1 oder 2, **dadurch gekennzeichnet, dass** der magnetisch leitfähige Teil des Stators (40) aus zwei scheibenförmigen Statorblechen (420), die jeweils mit mehreren Klauenpolen (42) einstückig sind und einem zylindermantelförmigen Rückschlussring (43) besteht.

4. Elektromotor nach Anspruch 1, 2 oder 3, **dadurch gekennzeichnet, dass** die scheibenförmigen Statorbleche (420) Aussparungen (422) aufweisen, die am radial äußerem Rand der Statorbleche (420) angeordnet und dort gleichmäßig verteilt sind.

5. Elektromotor nach Anspruch 1, 2, 3 oder 4, **dadurch gekennzeichnet, dass** der Rückschlussring (43) spielfrei mit den Statorblechen (420) verbunden ist.

6. Elektromotor nach Anspruch 5, **dadurch gekennzeichnet, dass** der Rückschlussring (43) mit den Statorblechen (420) verstemmt ist.

7. Elektromotor nach Anspruch 6, **dadurch gekennzeichnet, dass** der Rückschlussring (43) an mehreren Stellen in seinem axialen Randbereich geschlitzt ist und dass Blechbrücken (430), die an die Schlitze (431) angrenzen, radial nach innen verformt sind.

8. Elektromotor nach zumindest einem der vorangehenden Ansprüche, **dadurch gekennzeichnet, dass** die beiden scheibenförmigen Statorbleche (420) mit den Klauenpolen über ein elektrisch isolierendes Kunststoffmaterial miteinander verbunden sind.

9. Elektromotor nach Anspruch 8, **dadurch gekennzeichnet, dass** die Klauenpole mit plastisch verarbeitbarem Kunststoffmaterial in Form eines Isolierstoffkörpers (46) für die Statorwicklung (41) umspritzt sind.

10. Elektromotor nach Anspruch 9, **dadurch gekennzeichnet, dass** der Isolierstoffkörper (46) Klemmschneidkontakte (63) aufweist, wobei je anzuschließendem Wickeldraht ein Vorsprung (466) in Axialrichtung vorgesehen ist, der einen Aufnahmeschlitz (461) für einen Anschlussdraht und eine Montageausnehmung (462) für einen Kontaktpin (62) aufweist.

11. Elektromotor nach Anspruch 9 oder 10, **dadurch gekennzeichnet, dass** der Isolierstoffkörper (46) mit Befestigungsmitteln (463) für eine Leiterplatte (61) einstückig ist.

12. Elektromotor nach Anspruch 11, **dadurch gekennzeichnet, dass** die Befestigungsmittel (463) aus einem Anschlag (464) und einem Schnappmittel (465) zusammengesetzt sind

13. Elektromotor nach Anspruch 10, 11 oder 12, **dadurch gekennzeichnet, dass** der Kontaktpin (62) einerseits eine Klemmschneidgeometrie aufweist und andererseits als lotfreier Einpresskontakt ausgebildet ist, der mit der Leiterplatte (61) elektrisch verbunden ist.

14. Kreiselpumpe die von einem Elektromotor nach zumindest einem der vorangehenden Ansprüche angetrieben wird.

15. Kreiselpumpe nach Anspruch 14, **dadurch gekennzeichnet, dass** der Isolierstoffkörper mit einem Spalttopf (116) einstückig ist, der einen Nassraum (101) von einem Trockenraum (99) der Kreiselpumpe abgrenzt.

16. Kreiselpumpe nach Anspruch 15, **dadurch gekennzeichnet, dass** der Spalttopf (116) aus einem Kunststoffmaterial besteht, das für Laserlicht einer Wellenlänge oder eines Wellenlängenbereichs transparent ist.

17. Kreiselpumpe nach 15 oder 16, **dadurch gekennzeichnet, dass** der Spalttopf (116) als Bestandteil eines zweiten Gehäuseteils (104) mit einem ersten Gehäuseteil (103) verschweißt ist.

18. Kreiselpumpe nach Anspruch 15, 16 oder 17, **dadurch gekennzeichnet, dass** der Spalttopf (116) als Bestandteil eines zweiten Gehäuseteils (104) mit einem Motorgehäuseteil (44) verschweißt ist.

19. Kreiselpumpe nach zumindest einem der vorangehenden Ansprüche, **dadurch gekennzeichnet, dass** das erste Gehäuseteil (103) oder das Motorgehäuseteil (44) aus einem dasselbe Laserlicht absorbierendem Material besteht.

20. Verfahren zur Herstellung von Klauenpolen mit den Schritten: - Tiefziehen eines Topfs aus magnetisch leitfähigem Blechmaterial, - axiales Ausstanzen von Klauenpolen aus dem Topf, Umformen der Klauenpole in eine exakte Form.
